# EUROPEAN PATENT APPLICATION

(11) **EP 4 738 528 A2**
(43) Date of publication of application: **06.05.2026**
(21) Application number: 25209949.4
(22) Date of filing: 21.10.2025
(51) Int. Cl.: H01M 10/48, H01M 10/613, H01M 10/63, H01M 10/6567, H01M 10/6568

(54) **IMMERSION LIQUID-COOLED ENERGY STORAGE SYSTEM AND CLUSTER-LEVEL CONTROL CIRCUIT**

(30) Priority: 01.11.2024 CN 202411547629
(71) Applicant: Zhejiang Jinko Energy Storage Co., Ltd., Jiaxing, Zhejiang (CN)
(72) Inventor: WANG, Jinsheng, Haining, Zhejiang (CN)
(74) Representative: Balder IP Law, S.L.

(57) **Abstract**

An immersion liquid-cooled energy storage system includes: at least two cooling units (101), each having an accommodation cavity for housing a battery cluster (102); at least two subinlet pipes (113) and sub-outlet pipes (114); a cluster-level control unit (105) including a gas relay (115) and an electric valve (125), installed on each sub-outlet pipe (114) and corresponding oneto-one with the sub-outlet pipe (114). The gas relay (115) is configured to send a thermal runaway signal to a system-level controller (106) in the case that the thermal runaway occurs in the battery cluster (102). The electric valve (125) is configured to open or close the cooling liquid flow path of the sub-outlet pipe (114) corresponding to the electric valve (125). The system-level controller (106) is configured to, upon identifying the battery cluster (102) sending the thermal runaway signal as the target battery cluster, at least receive and, based on the thermal runaway signal, control to shut off the electric valve (125) corresponding to the target battery cluster.

## Description

### TECHNICAL FIELD

Various embodiments described in this document relate to the field of energy storage, and in particular to an immersion liquid-cooled energy storage system and a cluster-level control circuit.

### BACKGROUND

Energy storage power stations, energy storage containers, and large-scale chemical battery energy storage systems for commercial and industrial applications are required to dispose multiple components, including energy storage batteries, battery racks, fire protection systems, electrical control cabinets, liquid cooling units, and temperature/humidity regulation equipment, within limited space.

### SUMMARY

Embodiments of the present disclosure provide an immersion liquid-cooled energy storage system and a cluster-level control circuit. The present invention is set out in the appended set of claims.

According to some embodiments of the present disclosure, one aspect of the present disclosure provides an immersion liquid-cooled energy storage system including: at least two cooling units, each corresponding to a battery cluster in a one-to-one arrangement and having an accommodation cavity for housing the battery cluster. The immersion liquid-cooled energy storage system includes at least two sub-inlet pipes and at least two sub-outlet pipes corresponding to the at least two sub-inlet pipes in a one-to-one configuration, with a respective sub-outlet pipe of the at least two sub-outlet pipes and the corresponding sub-inlet pipe connected to the same cooling unit. The immersion liquid-cooled energy storage system includes cluster-level control units installed on the at least two sub-outlet pipes and corresponding to the at least two sub-outlet pipes in a one-to-one configuration. The immersion liquid-cooled energy storage system includes a system-level controller electrically connected to the cluster-level control units. Each of the cluster-level control units includes a gas relay and an electric valve. The gas relay is configured to, upon thermal runaway of the battery cluster, send a thermal runaway signal to the system-level controller. The electric valve is configured to open or close a coolant flow path in a sub-outlet pipe corresponding to the electric valve. The system-level controller is configured to identify the battery cluster sending the thermal runaway signal as a target battery cluster, at least receive the thermal runaway signal, and control the electric valve corresponding to the target battery cluster to shut off based on the thermal runaway signal.

In some embodiments, the gas relay includes a pre-warning relay and an emergency stop relay. The pre-warning relay is configured to: in the case that a gas accumulation in the gas relay reaches a first threshold, turn on a pre-warning switch in the pre-warning relay to send a warning signal to the system-level controller. The emergency stop relay is configured to: in the case that a gas accumulation in the gas relay reaches a second threshold, turn on an emergency stop switch in the emergency stop relay to send the thermal runaway signal to the system-level controller. The first threshold is less than the second threshold.

In some embodiments, the gas relay includes an inner cavity for accommodating the coolant, a float and a baffle provided in the inner cavity. The float floats with changes of the coolant level in the inner cavity. The gas relay further includes a magnet, signal triggering contacts, and circuit-breaking contacts. The gas relay is configured such that: in the case that the float descends to a first preset position, the magnet controls the signal triggering contacts to turn on, to send a warning signal to the system-level controller; in the case that the baffle is impacted to a second preset position, the magnet controls the circuit-breaking contacts to turn on, to send a thermal runaway signal to the system-level controller. Taking a bottom surface of the inner cavity as a reference plane, the second preset position is lower than the first preset position.

In some embodiments, the immersion liquid-cooled energy storage system further includes at least two circuit breakers electrically connected to the battery clusters and corresponding to the battery clusters in a one-to-one configuration; the system-level controller is further configured to: receive the thermal runaway signal, and control, based on the thermal runaway signal, the circuit breaker corresponding to the target battery cluster to shut off, to cut off the power to the target battery cluster.

In some embodiments, each cooling unit has an upper side and a lower side opposite to each other along a height direction of the immersion liquid-cooled energy storage system; and among the sub-outlet pipe and the sub-inlet pipe connected to the same cooling unit, the sub-outlet pipe connects to the upper side while the sub-inlet pipe connects to the lower side.

In some embodiments, the sub-outlet pipe has a first end close to the cooling unit and a second end far away from the cooling unit, with the cluster-level control unit installed on the second end. Taking a plane of the lower side as a reference plane, a second distance between the second end and the reference plane is greater than a first distance between the first end and the reference plane.

In some embodiments, an included angle between a connecting line of the first end and the second end and the reference plane is in a range of 1.5° to 6° .

In some embodiments, the immersion liquid-cooled energy storage system further includes a float ball, located on a liquid surface of the coolant in the cooling unit, and the float ball floats with a change of the liquid level of the coolant in the cooling unit. The immersion liquid-cooled energy storage system further includes a float switch arranged in the cooling unit, and configured such that in the case that the float descends to a third preset position, the float switch is turned on. The system-level controller is further configured to, in the case that the float switch is turned on, receive the thermal runaway signal and control the electric valve corresponding to the target battery cluster to shut off based on the thermal runaway signal.

In some embodiments, the immersion liquid-cooled energy storage system further includes a main inlet pipe connected to the at least two sub-inlet pipes, and a main outlet pipe connected to the at least two sub-outlet pipes.

In some embodiments, the immersion liquid-cooled energy storage system further includes a liquid cooling machine and a plate heat exchanger, which are configured to work together to cool the coolant from the main outlet pipe before supplying the coolant back to the main inlet pipe.

In some embodiments, the immersion liquid-cooled energy storage system further includes a circulation pump installed on the main inlet pipe.

In some embodiments, the immersion liquid-cooled energy storage system further includes a plurality of check valves. At least one of the plurality of check valves is installed on an end close to the cooling unit of a respective sub-inlet pipe of the at least two sub-inlet pipes, and is configured to control a coolant flow rate in the respective sub-inlet pipe. At least one of the plurality of check valves is installed on an end close to the cooling unit of the respective sub-outlet pipes, and is configured to control a coolant flow rate in the respective sub-outlet pipe.

In some embodiments, the system-level controller is further configured to receive the warning signal, and, based on the warning signal, produce an alert configured to remind maintenance personnel of potential hazards in the immersion liquid-cooled energy storage system.

In some embodiments, the gas relay is further configured to operate in a warning mode triggered by the pre-warning relay or in an emergency stop mode triggered by the emergency stop relay.

In some embodiments, the first threshold ranges from 100 ml to 300 ml and the second threshold ranges from 400 ml to 600 ml.

In some embodiments, the gas relay is a single-float gas relay or a dual-float gas relay.

According to some embodiments of the present disclosure, another aspect of the present disclosure provides a cluster-level control circuit, applied to any one of the immersion liquid-cooled energy storage systems described above. The cluster-level control circuit includes: a power supply, an emergency stop switch and a first control switch in parallel with the power supply and in series with each other. The emergency stop switch is configured such that in the case that a thermal runaway occurs in the battery cluster, the gas relay controls the emergency stop switch to turn on. The first control switch is configured such that in the case that the thermal runaway occurs in the battery cluster, the system-level controller controls the first control switch to turn on. The electric valve connected in parallel with the first control switch is configured such that in the case that the electric valve is electrically connected to the power supply, the electric valve is shut off.

In some embodiments, the cluster-level control circuit further includes: a pre-warning switch and a second control switch connected in parallel with the power supply and in series with each other. The pre-warning switch is configured such that in the case that a minor fault or a minor coolant leakage occurs in the battery cluster, the gas relay controls the pre-warning switch to turn on. The second control switch is configured such that in the case that a minor fault occurs in the battery cluster or a minor coolant leakage occurs, the system-level controller controls the second control switch to turn on. and/or, A circuit breaker connected in parallel with the first control switch, is configured such that in the case that the circuit breaker is electrically connected to the power supply, the circuit breaker is shut off.

In some embodiments, the cluster-level control circuit further includes a float switch and a float ball switch. The float switch and the float ball switch are configured to be turned off during a normal operation of the immersion liquid-cooled energy storage system. The float switch is further configured to be turned on upon a float in the cooling unit dropping to a first preset position and a magnet controlling triggering contacts to turn on, and trigger a pre-warning relay in the gas relay to send a warning signal to the system-level controller. The float ball switch is further configured to be turned on upon a float ball in the cooling unit dropping to a third preset position and trigger an emergency stop relay in the gas relay to send the thermal runaway signal to the system-level controller.

In some embodiments, the cluster-level control circuit further includes a circuit breaker connected in parallel with the first control switch and configured to be shut off in a cash that the circuit breaker is electrically connected to the power supply.

### BRIEF DESCRIPTION OF THE DRAWINGS

One or more embodiments are exemplarily illustrated by the figures in accompanying drawings corresponding to the embodiments. These exemplary illustrations do not limit the embodiments. The figures in the drawings are not to scale unless expressly stated. To more clearly describe the technical solutions in the embodiments of the present disclosure or in the conventional art, the following will briefly introduce the accompanying drawings required for describing the embodiments. Obviously, the drawings in the following description merely represent some embodiments of the present disclosure. For those of ordinary skill in the art, other drawings may be obtained from these accompanying drawings without creative effort.
FIG. 1 is a first schematic partial cross-sectional view of an immersion liquid-cooled energy storage system according to an embodiment of the present disclosure.
FIG. 2 is a functional block diagram of a cluster-level control unit and a system-level controller in an immersion liquid-cooled energy storage system according to an embodiment of the present disclosure.
FIG. 3 is a functional block diagram of a gas relay and a system-level controller in an immersion liquid-cooled energy storage system according to an embodiment of the present disclosure.
FIG. 4 is a schematic partial cross-sectional view of an immersion liquid-cooled energy storage system including a gas relay according to an embodiment of the present disclosure.
FIG. 5 is a functional block diagram of a system-level controller, circuit breakers, and battery clusters in an immersion liquid-cooled energy storage system according to an embodiment of the present disclosure.
FIG. 6 is a second schematic partial cross-sectional view of an immersion liquid-cooled energy storage system according to an embodiment of the present disclosure.
FIG. 7 is a third schematic partial cross-sectional view of an immersion liquid-cooled energy storage system according to an embodiment of the present disclosure.
FIG. 8 is a fourth schematic partial cross-sectional view of an immersion liquid-cooled energy storage system according to an embodiment of the present disclosure.
FIG. 9 is a schematic diagram of a cluster-level control circuit applied to an immersion liquid-cooled energy storage system according to another embodiment of the present disclosure.

### DETAILED DESCRIPTION OF THE EMBODIMENTS

At present, immersed liquid cooling technology is widely adopted in the energy storage industry. To ensure that lithium-ion batteries operate within favorable temperature ranges and fully utilize their performance, immersed liquid cooling methods are commonly employed for battery thermal management.

However, in conventional immersed liquid cooling solutions, the coolant generally circulates as an integrated system. When individual battery core is subjected to thermal runaway, and large quantities of flammable gases are ejected, conductive electrolytes pollute the coolant. The contaminated coolant then circulates through pipelines to other battery clusters, leading to system-wide coolant contamination. This not only increases a risk of thermal propagation but also poses potential hazards to the entire energy storage system.

As can be seen, an issue of coolant contamination in an immersion liquid-cooled energy storage systems remains to be solved.

The embodiments of the present disclosure provide an immersion liquid-cooled energy storage system and a cluster-level control circuit. In the immersion liquid-cooled energy storage system, each battery cluster is matched with a cooling unit to achieve targeted cooling for any battery cluster. Based on this, a cluster-level control unit is installed on the coolant output path of each cooling unit, i.e., the sub-outlet pipe. The gas relay in the cluster-level control unit monitors whether a thermal runaway occurs in the battery cluster. When the thermal runaway occurs in the battery cluster, the system-level controller is used to shut off the electric valve in the cluster-level control unit, thereby blocking the coolant flow path of the sub-outlet pipe corresponding to the battery cluster experiencing the thermal runaway. In this way, even if the battery cluster experiencing the thermal runaway contaminates the coolant in the cooling unit corresponding to the battery cluster, the cluster-level control unit can prevent the contaminated coolant from flowing to other cooling units through the sub-outlet pipe. In other words, the cluster-level control unit can isolate the coolant in a single cooling unit, achieving single-cluster isolation of the coolant. It also prevents the thermal runaway phenomenon from spreading throughout the entire immersion liquid-cooled energy storage system via the coolant circulation, thereby further enhancing a safety of the immersion liquid-cooled energy storage system. Additionally, after achieving single-cluster isolation of the coolant, it facilitates maintenance personnel to perform separate maintenance on the cooling unit with contaminated coolant. Since shutting off the electric valve does not affect other cooling units, single-cluster maintenance of the coolant is made easier.

In the description of the embodiments of the present disclosure, technical terms such as "first" and "second" are used only to distinguish different objects and should not be construed as indicating or implying relative importance or implicitly specifying the quantity, specific order, or hierarchy of the indicated technical features. In the description of the embodiments of the present disclosure, the term "plurality" means two or more, unless explicitly specified otherwise.

In this document, reference to "an embodiment" means that a particular feature, structure, or characteristic described in connection with the embodiment may be included in at least one embodiment of the present disclosure. An appearance of this phrase in various places in the specification does not necessarily refer to the same embodiment, nor is it an independent or alternative embodiment mutually exclusive with other embodiments. Those skilled in the art will explicitly and implicitly understand that the embodiments described herein may be combined with other embodiments.

In the description of the embodiments of the present disclosure, the term "and/or" is merely a description of an association relationship between associated objects, indicating that three relationships may exist. For example, "A and/or B" may indicate: the presence of A alone, the simultaneous presence of A and B, or the presence of B alone. Additionally, the character "/" in this document generally indicates an "or" relationship between the associated objects.

In the description of the embodiments of the present disclosure, the term "plurality" refers to two or more (including two). Similarly, "a plurality of groups" refers to two or more groups (including two groups), and "a plurality of pieces" refers to two or more pieces (including two pieces).

In the description of the embodiments of the present disclosure, technical terms indicating orientation or positional relationships, such as "center," "longitudinal," "transverse," "length," "width," "thickness," "upper," "lower," "front," "rear," "left," "right," "vertical," "horizontal," "top," "bottom," "inner," "outer," "clockwise," "counterclockwise," "axial," "radial," and "circumferential," are based on the orientation or positional relationships shown in the accompanying drawings. These terms are used only to facilitate the description of the embodiments of the present disclosure and simplify the description, rather than indicating or implying that the referenced device or element must have a specific orientation or be constructed and operated in a specific orientation. Therefore, these terms should not be construed as limiting the embodiments of the present disclosure.

In the description of the embodiments of the present disclosure, unless otherwise explicitly specified or defined, technical terms such as "install," "connect," "link," and "fix" should be interpreted broadly. For example, a connection may be a fixed connection, a detachable connection, or an integral connection; it may also be a mechanical connection, an electrical connection, or a direct connection, or it may be an indirect connection through an intermediary medium, or an internal communication or interaction between two components. Those of ordinary skill in the art can understand the specific meanings of the above terms in the embodiments of the present disclosure based on specific circumstances.

In the accompanying drawings corresponding to the embodiments of the present disclosure, for better understanding and ease of description, the thicknesses and areas of layers are exaggerated. When describing that a component (such as a layer, a film, a region, or a substrate) is located on or above another component or its surface, the component may be "directly" located on the surface of the other component, or there may be a third component between the two components. Conversely, when describing that a component is located on the surface of another component or that another component is formed or provided on the surface of a component, it means there is no third component between the two components. Additionally, when describing that a component is "substantially" formed on another component, it means the component is not formed on the entire surface (or front surface) of the other component, nor is it formed on part of the edge of the entire surface.

In the description of the embodiments of the present disclosure, when a component is described as "including" another component, unless otherwise specified, it does not exclude other components, and other components may also be included. Furthermore, when a component such as a layer, a film, a region, or a plate is described as being "on" or "located on" another component, it may be "directly on" the other component (i.e., located on the surface of the other component with no other component in between), or there may be another component in between. Additionally, when a component such as a layer, a film, a region, or a plate is described as being "directly located on" another component, or when a component is located on the surface of another component, it means there is no other component in between.

The terminology used in the description of the various embodiments herein is intended only to describe specific embodiments and is not limiting. As used in the description of the various embodiments and the appended claims, the term "the component" is also intended to include the plural form unless the context clearly indicates otherwise. Here, components include layers, films, regions, plates, and other components.

The following will elaborate on the various embodiments of the present disclosure in conjunction with the accompanying drawings. However, those of ordinary skill in the art should understand that in the various embodiments of the present disclosure, many technical details are provided to help readers better understand the embodiments of the present disclosure. However, even without these technical details and various changes and modifications based on the following embodiments, the technical solutions claimed in the embodiments of the present disclosure can still be implemented.

An embodiment of the present disclosure provides an immersion liquid-cooled energy storage system. The following will provide a detailed explanation of the immersion liquid-cooled energy storage system according to an embodiment of the present disclosure in conjunction with the accompanying drawings.

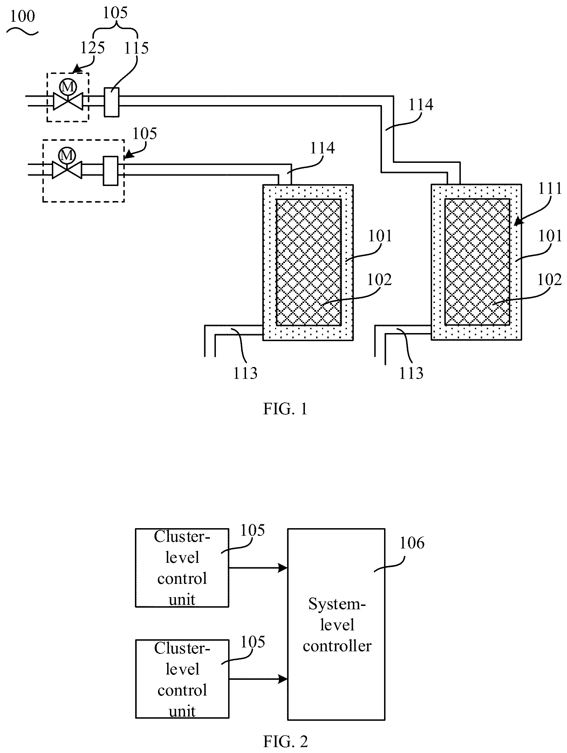

With reference to FIG. 1 and FIG. 2, the immersion liquid-cooled energy storage system 100 includes at least two cooling units 101, where each cooling unit 101 corresponds to a battery cluster 102, and the cooling unit 101 has an accommodation cavity 111 for housing the battery cluster 102. The immersion liquid-cooled energy storage system 100 includes at least two sub-inlet pipes 113 and sub-outlet pipes 114 corresponding to the at least two sub-inlet pipes 113 in a one-to-one configuration, where each sub-outlet pipe 114 and the corresponding sub-inlet pipe 113 are connected to the same cooling unit 101. The immersion liquid-cooled energy storage system 100 includes cluster-level control units 105 installed on the sub-outlet pipes 114 and corresponding to the sub-outlet pipes 114 in a one-to-one configuration, where each cluster-level control unit 105 includes a gas relay 115 and an electric valve 125. The immersion liquid-cooled energy storage system 100 includes a system-level controller 106 electrically connected to the cluster-level control units 105. The gas relay 115 is configured to send a thermal runaway signal to the system-level controller 106 if a thermal runaway occurs in the battery cluster 102. The electric valve 125 is configured to open or close the coolant flow path of the sub-outlet pipe 114 corresponding to the electric valve 125. The battery cluster 102 that sends the thermal runaway signal is designated as the target battery cluster, and the system-level controller 106 is configured to at least receive and, based on the thermal runaway signal, control the electric valve 125 corresponding to the target battery cluster to shut off.

It should be noted that FIG. 1 is a first schematic partial cross-sectional view of the immersion liquid-cooled energy storage system according to an embodiment of the present disclosure, and FIG. 2 is a functional block diagram of the cluster-level control unit and the system-level controller in the immersion liquid-cooled energy storage system according to an embodiment of the present disclosure.

To improve energy storage density, the immersion liquid-cooled energy storage system 100 typically includes multiple battery clusters 102. Designing each battery cluster 102 to be surrounded by a cooling unit 101 not only achieves immersed liquid cooling for each battery cluster 102 but also, based on the one-to-one correspondence between battery clusters 102 and cooling units 101, enables individual liquid cooling for any battery cluster 102 to achieve targeted cooling.

Based on this, the cluster-level control unit 105 is installed on the coolant output path of each cooling unit 101, i.e., the sub-outlet pipe 114. The gas relay 115 in the cluster-level control unit 105 monitors whether the thermal runaway occurs in the battery cluster 102. When the thermal runaway occurs in the battery cluster 102, the system-level controller 106 is used to shut off the electric valve 125 in the cluster-level control unit 105, thereby blocking the coolant flow path of the sub-outlet pipe 114 corresponding to the battery cluster 102 experiencing the thermal runaway. In this way, even if the battery cluster 102 experiencing thermal runaway contaminates the coolant in the cooling unit 101 corresponding to the battery cluster 102, the cluster-level control unit 105 can prevent the contaminated coolant from flowing to other cooling units 101 through the sub-outlet pipe 114. In other words, the cluster-level control unit 105 can isolate the coolant in a single cooling unit 101, achieving single-cluster isolation of the coolant. It also prevents the thermal runaway phenomenon from spreading throughout the entire immersion liquid-cooled energy storage system 100 via the coolant circulation, thereby further enhancing the safety of the immersion liquid-cooled energy storage system 100.

Additionally, after achieving single-cluster isolation of the coolant, it facilitates maintenance personnel to perform separate maintenance on the cooling unit 101 with contaminated coolant. Since shutting off the electric valve 125 does not affect other cooling units 101, single-cluster maintenance of the coolant is made easier. It is worth emphasizing that, to achieve liquid cooling for multiple battery clusters 102, the immersion liquid-cooled energy storage system 100 is normally filled with coolant in the multiple cooling units 101 during operation. Therefore, an amount of coolant required for the entire immersion liquid-cooled energy storage system 100 is substantial. An integrated design of the system-level controller 106 and the cluster-level control unit 105 in this embodiment not only achieves single-cluster isolation and maintenance of the coolant but also helps reduce the amount of coolant that needs to be replaced, thereby lowering the maintenance costs of the immersion liquid-cooled energy storage system 100.

The following will provide a more detailed explanation of an embodiment of the present disclosure in conjunction with the accompanying drawings.

In some embodiments, the gas relay 115 can produce not only a thermal runaway signal but also a warning signal. Based on this, the system-level controller 106 can not only receive and, based on the thermal runaway signal, control the electric valve 125 corresponding to the target battery cluster to shut off but also receive and, based on the warning signal, produce an alert to remind maintenance personnel of potential hazards in the immersion liquid-cooled energy storage system.

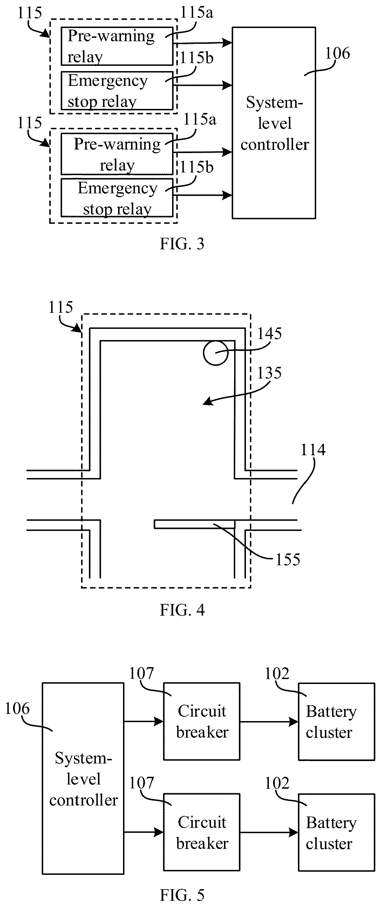

In some embodiments, with reference to FIG. 3, which is a functional block diagram of the gas relay and the system-level controller in the immersion liquid-cooled energy storage system according to an embodiment of the present disclosure, the gas relay 115 may include a pre-warning relay 115a and an emergency stop relay 115b. The pre-warning relay 115a is configured to turn on a pre-warning switch when the gas accumulation in the gas relay 115 reaches a first threshold, to send a warning signal to the system-level controller 106. The emergency stop relay 115b is configured to turn on an emergency stop switch when the gas accumulation in the gas relay 115 reaches a second threshold, to send a thermal runaway signal to the system-level controller 106. Here, the first threshold is less than the second threshold.

The gas relay 115 may operate in two modes, and each is triggered by different functional components. Specifically, one mode is the warning mode, triggered by the pre-warning relay 115a, and the other mode is the emergency stop mode, triggered by the emergency stop relay 115b.

In some cases, the warning mode may be considered as a minor fault in the immersion liquid-cooled energy storage system 100, causing gas to accumulate in the gas relay 115. When the gas accumulation in the gas relay 115 reaches the first threshold, the pre-warning switch in the pre-warning relay 115a is triggered to turn on, to send a warning signal to the system-level controller 106. Minor faults in the immersion liquid-cooled energy storage system 100 may include the following scenarios: increased gas production in the cells of the battery cluster 102 without the thermal runaway; or, localized gas accumulation in the battery cluster 102; or minor leaks in the coolant pipes connecting multiple cooling units 101, such as the sub-inlet pipe 113 or sub-outlet pipe 114.

In some cases, the emergency stop mode may be considered as a thermal runaway event in the immersion liquid-cooled energy storage system 100, causing rapid accumulation of a large amount of gas in the gas relay 115. When the gas accumulation in the gas relay 115 reaches the second threshold, the emergency stop switch in the emergency stop relay 115b is triggered to turn on, to send a thermal runaway signal to the system-level controller 106. When a cell in the battery cluster 102 is subjected to the thermal runaway, the cell releases a large amount of gas. The gas relay 115 corresponding to the battery cluster 102 (i.e., the target battery cluster) will detect the large amount of gas released by the cell and send a thermal runaway signal to the system-level controller 106. The system-level controller 106 then, based on the thermal runaway signal, control the electric valve 125 corresponding to the target battery cluster to shut off, thereby blocking the coolant flow path of the sub-outlet pipe 114 corresponding to the battery cluster 102 being subjected to thermal runaway. This promptly isolates the potentially contaminated coolant within the cooling unit 101 corresponding to the target battery cluster.

In some examples, the first threshold ranges from 100 ml to 300 ml (e.g., 110 ml, 120 ml, 130 ml, 140 ml, 150 ml, 160 ml, 170 ml, 180 ml, 190 ml, 200 ml, 210 ml, 220 ml, 230 ml, 240 ml, 250 ml, 260 ml, 270 ml, 280 ml, or 290 ml). It is worth noting that setting the first threshold within this range helps the gas relay 115 sensitively detect gas intrusion into the gas relay 115, improving a sensitivity of the warning mode of the gas relay 115. The second threshold ranges from 400 ml to 600 ml (e.g., 410 ml, 420 ml, 430 ml, 440 ml, 450 ml, 460 ml, 470 ml, 480 ml, 490 ml, 500 ml, 510 ml, 520 ml, 530 ml, 540 ml, 550 ml, 560 ml, 570 ml, 580 ml, or 590 ml). Setting the second threshold within this range ensures the gas relay 115 promptly enters the emergency stop mode, facilitating a rapid single-cluster isolation of the contaminated coolant.

In some embodiments, with reference to FIG. 4, which is a partial cross-sectional view of the immersion liquid-cooled energy storage system including a gas relay according to an embodiment of the present disclosure, the gas relay 115 has an inner cavity 135 for accommodating the coolant. The inner cavity 135 is provided with a float 145 and a baffle 155. The float 145 moves with changes in the coolant level in the inner cavity 135. The gas relay 115 further includes a magnet, signal triggering contacts, and circuit-breaking contacts. The gas relay 115 is further configured such that when the float 145 decreases to a first preset position, the magnet controls the signal triggering contacts to turn on, to send a warning signal to the system-level controller 106. When the baffle 155 is impacted to a second preset position, the magnet controls the circuit-breaking contacts to turn on, to send a thermal runaway signal to the system-level controller 106. Taking a bottom surface of the inner cavity 135 as the reference plane, the second preset position is lower than the first preset position.

During a normal operation of the immersion liquid-cooled energy storage system 100, the gas relay 115 is filled with the coolant. When a minor fault or a thermal runaway occurs in the system, gas accumulates in the gas relay 115, causing the coolant level in the gas relay 115 to drop. The float 145 descends with the dropping coolant level. When the float 145 reaches the first preset position, the magnet control the signal triggering contacts to turn on, to send a warning signal to the system-level controller 106. During the thermal runaway of the immersion liquid-cooled energy storage system 100, gas rapidly accumulates in the gas relay 115, causing the coolant level to drop quickly to the lowest bottom of the gas relay 115. The rapid change in gas pressure and the swift descent of the float 145 impact the baffle 155 of the gas relay 115 significantly, causing the baffle 155 to move to the second preset position. The magnet then controls the circuit-breaking contacts to turn on, to send a thermal runaway signal to the system-level controller 106.

In some cases, when the float 145 drops to the first preset position, the gas accumulation in the gas relay 115 reaches the first threshold. When the baffle 155 is impacted to the second preset position, the gas accumulation reaches the second threshold.

In some embodiments, the gas relay 115 may be a single-float or dual-float gas relay.

In some embodiments, with reference to FIG. 5, which is a functional block diagram of the system-level controller, circuit breakers, and battery clusters in the immersion liquid-cooled energy storage system according to an embodiment of the present disclosure, the immersion liquid-cooled energy storage system 100 may further include at least two circuit breakers 107. Each circuit breaker 107 is electrically connected to a battery cluster 102 in a one-to-one correspondence. The system-level controller 106 is further configured to receive and, based on the thermal runaway signal, control the circuit breaker 107 corresponding to the target battery cluster to shut off, thereby cutting off the power supply to the target battery cluster.

The system-level controller 106 not only coordinates the gas relay 115 and the electric valve 125 in the cluster-level control unit 105 to turn on the electric valve 125 corresponding to the target battery cluster upon detecting the thermal runaway of the battery cluster 102 by the gas relay 115 (achieving single-cluster isolation of the coolant) but also, based on the thermal runaway signal, shuts off the circuit breaker 107 corresponding to the target battery cluster. This stops an operation of the target battery cluster being subjected to the thermal runaway, preventing the current in the target battery cluster from exacerbating the thermal runaway and promptly curbing the thermal runaway phenomenon of the target battery cluster, thereby further enhancing the safety of the immersion liquid-cooled energy storage system 100.

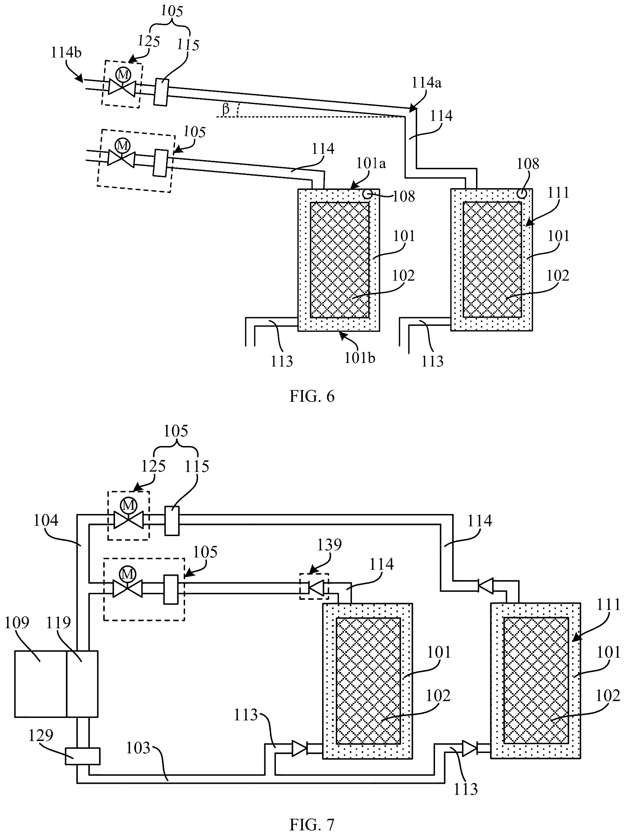

In some embodiments, with reference to FIG. 6, which is a second partial cross-sectional view of the immersion liquid-cooled energy storage system according to an embodiment of the present disclosure, the cooling unit 101 has an upper side 101a and a lower side 101b opposite to each other along the height direction of the immersion liquid-cooled energy storage system 100. Among the sub-outlet pipe 114 and the sub-inlet pipe 113 connected to the same cooling unit 101, the sub-outlet pipe 114 is connected to the upper side 101a, and the sub-inlet pipe 113 is connected to the lower side 101b.

The cluster-level control unit 105 is installed on the sub-outlet pipe 114, which is connected to the upper side 101a. This ensures that the gas relay 115 in the cluster-level control unit 105 is installed at the top of the cooling unit 101. Thus, when the gas is generated due to a fault in the immersion liquid-cooled energy storage system 100, the gas gradually accumulates upward and is promptly detected by the gas relay 115 at the top of the cooling unit 101. This improves the sensitivity of the gas relay 115 in detecting the gas, enabling the gas relay 115 to promptly produce a warning signal or a thermal runaway signal. The system-level controller 106 (referring to FIG. 5) can then take appropriate control actions based on the received warning signal or thermal runaway signal. Compared to existing methods that the float ball in the cooling unit 101 shows a significant movement and triggers the corresponding alarm signal only after a significant amount of gas accumulates, the design in this embodiment of positioning the cooling unit 101 relative to the sub-outlet pipe 114 and sub-inlet pipe 113 and installing the cluster-level control unit 105 on the sub-outlet pipe 114 enables a faster detection of faults in the immersion liquid-cooled energy storage system 100, reducing a detection lag.

In some embodiments, continuing with reference to FIG. 6, the sub-outlet pipe 114 has a first end 114a close to the cooling unit 101 and a second end 114b far away from the cooling unit 101. The cluster-level control unit 105 is installed on the second end 114b. Taking the plane of the lower side 101b as the reference plane, a second distance between the second end 114b and the reference plane is greater than a first distance between the first end 114a and the reference plane.

In some cases, the reference plane may be considered horizontal, and the sub-outlet pipe 114 is inclined relative to the reference plane. The cluster-level control unit 105 is installed on the upward-tilted end of the sub-outlet pipe 114, i.e., the second end 114b.

Notably, the gas accumulated in the gas relay 115 of the cluster-level control unit 105 can rise from the corresponding battery cluster through the cooling unit 101 and sub-outlet pipe 114 to the gas relay 115. Given that gas tends to rise, designing the sub-outlet pipe 114 to be inclined facilitates the upward movement of gas bubbles in the coolant, improving the speed of gas bubble accumulation. Moreover, positioning the gas relay 115 at the upward-tilted end of the sub-outlet pipe 114 further enhances the sensitivity of the gas relay 115 in detecting the gas, ensuring timely detection of faults in the immersion liquid-cooled energy storage system 100.

In some embodiments, continuing with reference to FIG. 6, the included angle β between the line connecting of the first end 114a and the second end 114b and the reference plane ranges from 1.5° to 6°. In other words, an inclination angle of the sub-outlet pipe 114 relative to the reference plane is in a range of 1.5° to 6°.

If the angle β between the line connecting of the first end 114a and the second end 114b and the reference plane is less than 1.5°, an inclination degree of the sub-outlet pipe 114 relative to the reference plane is too slight, and an effect on promoting an upward movement of gas bubbles in the coolant is limited, given that the sub-outlet pipe 114 itself has a certain length. If the angle β between the line connecting of the first end 114a and the second end 114b and the reference plane exceeds 6°, an inclination degree of the sub-outlet pipe 114 relative to the reference plane is too large, occupying excessive vertical space in the immersion liquid-cooled energy storage system 100. This not only makes the sub-outlet pipe 114 prone to breakage due to accidental touches but also reduces an overall integration density of the immersion liquid-cooled energy storage system. Therefore, setting the angle β of the line connecting of the first end 114a and the second end 114b and the reference plane to be between 1.5° and 6° strikes a balance between promoting gas bubble movement and avoiding excessive vertical space occupation of the immersion liquid-cooled energy storage system 100, ensuring high integration density for the immersion liquid-cooled energy storage system 100.

In some examples, the included angle between the line connecting of the first end 114a and the second end 114b and the reference plane may be 1.6°, 1.8°, 2°, 2.4°, 2.5°, 2.8°, 3°, 3.2°, 3.5°, 3.6°, 4°, 4.3°, 4.5°, 4.7°, 5°, 5.4°, 5.5°, or 5.8°.

In some embodiments, continuing with reference to FIG. 6, the immersion liquid-cooled energy storage system 100 may further include a float ball 108 located on the coolant surface in the cooling unit 101. The float ball 108 moves with changes in the coolant level in the cooling unit 101. A float switch is installed in the cooling unit 101 and is configured to turn on when the float ball 108 drops to a third preset position. The system-level controller 106 is further configured to, upon the float switch turning on, receive and, based on the thermal runaway signal, control the electric valve 125 corresponding to the target battery cluster to shut off.

During a normal operation of the immersion liquid-cooled energy storage system 100, the cooling unit 101 is also filled with the coolant. When the thermal runaway occurs in the battery cluster 102, the cells of the battery cluster 102 release a large amount of gas, causing not only rapid gas accumulation in the gas relay 115 but also a noticeable drop in the coolant level in the cooling unit 101. The float ball 108 descends with the dropping coolant level until it reaches the third preset position, turning on the float switch. This prompts the system-level controller 106 to receive and, based on the thermal runaway signal, control the electric valve 125 corresponding to the target battery cluster to shut off.

It should be noted that, a volume of the coolant in a single cooling unit 101 is much larger than that in a single gas relay 115. If there is a severe leak in the coolant pipes connecting multiple cooling units 101 (e.g., the sub-inlet pipe 113 or sub-outlet pipe 114), it may also cause significant gas accumulation in the gas relay 115, leading to a drop in the coolant level to the bottom of the gas relay 115. However, the coolant level in the cooling unit 101 may not fluctuate much. Based on this, the system-level controller 106 is designed to control the electric valve 125 corresponding to the target battery cluster to shut off only when both the gas relay 115 produces a thermal runaway signal and the float switch turns on. This helps maintenance personnel distinguish between two scenarios based on whether the gas relay 115 produces a thermal runaway signal and whether the float switch turns on: a severe leak in the coolant pipes connecting multiple cooling units 101, or a thermal runaway occuring in the battery cluster 102.

Specifically, if the gas relay 115 produces a thermal runaway signal but the system-level controller 106 does not control to shut off the electric valve 125, it can be preliminarily concluded that there is a severe leak in the coolant pipes connecting multiple cooling units 101 but no thermal runaway in the battery cluster 102, prompting timely repair of the coolant pipes connecting multiple cooling units 101 by the maintenance personnel. If the gas relay 115 produces a thermal runaway signal and the system-level controller 106 controls to shut off the electric valve 125, it can be preliminarily concluded that the thermal runaway has occurred in the battery cluster 102, allowing maintenance personnel to quickly identify the battery cluster 102 which is subjected to the thermal runaway.

In some embodiments, with reference to FIG.s 7 or 8, the immersion liquid-cooled energy storage system may further include a main inlet pipe 103 connected to multiple sub-inlet pipes 113 and a main outlet pipe 104 connected to multiple sub-outlet pipes 114. The coolant flows from a coolant storage tank to multiple cooling units 101 through the main inlet pipe 103, then from the multiple cooling units 101 to the main outlet pipe 104 through the sub-outlet pipes 114, and finally back to the coolant storage tank through the main outlet pipe 104, completing the coolant circulation in the immersion liquid-cooled energy storage system 100.

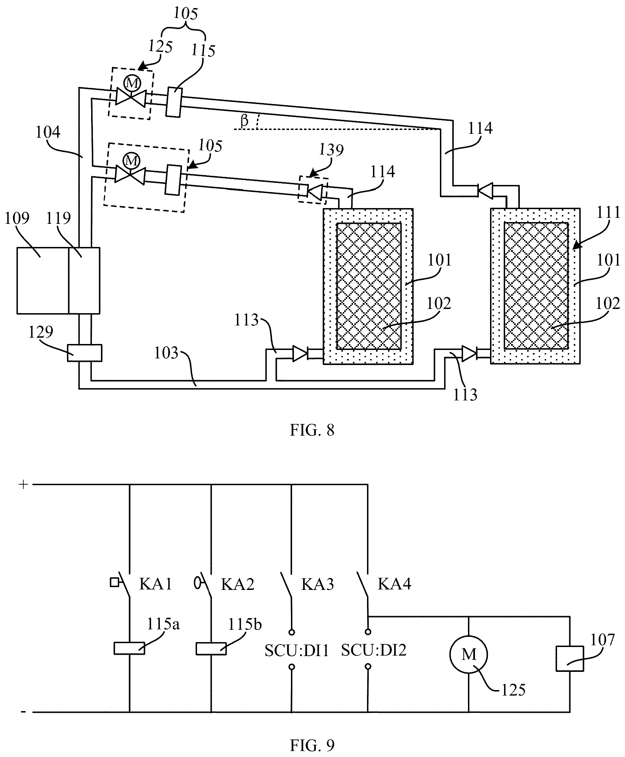

It should be noted that FIG. 7 is a third partial cross-sectional view of the immersion liquid-cooled energy storage system according to an embodiment of the present disclosure, and FIG. 8 is a fourth partial cross-sectional view of the immersion liquid-cooled energy storage system according to an embodiment of the present disclosure.

In some cases, continuing with reference to FIG. 7 or FIG. 8, the coolant storage tank may include a liquid cooling machine 109 and a plate heat exchanger 119, which work together to cool the coolant from the main outlet pipe 104 before supplying the coolant back to the main inlet pipe 103.

In some cases, continuing with reference to FIG. 7 or FIG. 8, the immersion liquid-cooled energy storage system may further include a circulation pump 129 installed on the main inlet pipe 103 to ensure smooth coolant circulation in the immersion liquid-cooled energy storage system 100.

In some cases, continuing with reference to FIG. 7 or FIG. 8, the energy storage system may further include multiple check valves 139. At least one check valve 139 is installed on one end of each sub-inlet pipe 113, the one end of each sub-inlet pipe 113 close to the cooling unit 101 to control the coolant flow rate in the sub-inlet pipe 113. Similarly, at least one check valve 139 is installed on one end of each sub-outlet pipe 114, the one end of each sub-outlet pipe 114 close to the cooling unit 101 to control the coolant flow rate in the sub-outlet pipe 114.

In some embodiments, the immersion liquid-cooled energy storage system may further include a vent (not shown) on the top surface of the gas relay 115 along the height direction of the immersion liquid-cooled energy storage system 100. Thus, when minor faults occur in the system (e.g., increased gas production in the battery cluster 102 without the thermal runaway, localized gas accumulation in the battery cluster 102, or minor leaks in the coolant pipes connecting multiple cooling units 101), the maintenance personnel can use the vent on the top surface of the gas relay 115 to release the accumulated gas in the gas relay 115 and refill the gas relay 115 with the coolant, restoring a normal operation of the immersion liquid-cooled energy storage system 100.

In summary, by installing the cluster-level control unit 105 on the coolant output path of each cooling unit 101 (i.e., the sub-outlet pipe 114), the gas relay 115 in the cluster-level control unit 105 is used to monitor for the thermal runaway in the battery cluster 102. Upon detecting the thermal runaway of the battery cluster 102, the system-level controller 106 controls the electric valve 125 in the cluster-level control unit 105 to shut off, to block the coolant flow path of the sub-outlet pipe 114 corresponding to the battery cluster 102 which is subjected to the thermal runaway. Thus, even if the battery cluster 102 which is subjected to the thermal runaway contaminates the coolant in the cooling unit 101 corresponding to the battery cluster 102, this also prevents the contaminated coolant from flowing to other cooling units 101 through the sub-outlet pipe 114. In other words, the cluster-level control unit 105 can isolate the coolant in individual cooling units 101, achieving single-cluster isolation of the coolant. It also prevents the thermal runaway phenomenon from spreading throughout the entire immersion liquid-cooled energy storage system 100 via the coolant circulation, thereby further enhancing safety of the immersion liquid-cooled energy storage system 100.

Another embodiment of the present disclosure provides a cluster-level control circuit, applied to the aforementioned immersion liquid-cooled energy storage system. The following will provide a detailed explanation of the cluster-level control circuit according to another embodiment of the present disclosure in conjunction with the accompanying drawings. It should be noted that parts identical or corresponding to those in the previous embodiments are not repeated here.

With reference to FIG. 8 and FIG. 9, and FIG. 9 is a schematic diagram of a cluster-level control circuit applied to the immersion liquid-cooled energy storage system according to another embodiment of the present disclosure, the cluster-level control circuit includes a power supply, an emergency stop switch KA4 and a first control switch SCU:DI2 which are connected in parallel with the power supply. The emergency stop switch KA4 and the first control switch SCU:DI2 are in series with each other. The emergency stop switch KA4 is configured such that when the thermal runaway occurs in the battery cluster 102, the gas relay 115 controls the emergency stop switch KA4 to turn on. The first control switch SCU:DI2 is configured such that when the thermal runaway occurs in the battery cluster 102, the system-level controller 106 controls the first control switch SCU:DI2 to turn on. The electric valve 125 connected in parallel with the first control switch SCU:DI2 is configured to shut off when the electric valve 125 is electrically connected to the power supply.

With reference to FIG. 3, FIG. 4, FIG. 8, and FIG. 9, the turning on/turning off of the emergency stop switch KA4 is controlled by the emergency stop relay 115b. When the gas accumulation in the gas relay 115 reaches the second threshold or the baffle 155 is impacted to the second preset position (i.e., the thermal runaway occurs in the battery cluster 102), the emergency stop relay 115b is triggered to control the emergency stop switch KA4 to turn on and sends a thermal runaway signal to the system-level controller 106. The turning on/turning off of the first control switch SCU:DI2 is controlled by the system-level controller 106. Upon receiving the thermal runaway signal, the system-level controller 106 is triggered to control the first control switch SCU:DI2 to turn on. It should be noted that, the electric valve 125 is electrically connected to the power supply and enabled to be shut off only when both the emergency stop switch KA4 and the first control switch SCU:DI2 are turned on, thereby blocking the coolant flow path of the sub-outlet pipe 114 corresponding to the battery cluster 102 being subjected to the thermal runaway.

Additionally, FIG. 9, as a schematic diagram of the cluster-level control circuit applied to the immersion liquid-cooled energy storage system according to another embodiment of the present disclosure, can also be considered an electrical schematic, circuit diagram, or wiring diagram of the cluster-level control circuit applied to the immersion liquid-cooled energy storage system. It clarifies the circuit connections and control logic among components such as the gas relay 115, the system-level controller 106, and the power supply in the immersion liquid-cooled energy storage system, achieving at least single-cluster isolation of the contaminated coolant.

In some examples, the power supply voltage may be 24V.

In some embodiments, continuing with reference to FIG. 8 and FIG. 9, the cluster-level control circuit may further include a pre-warning switch KA3 and a second control switch SCU:DI1 which are connected in parallel with the power supply, and the pre-warning switch KA3 and the second control switch SCU:DI1 are connected in series with each other. The pre-warning switch KA3 is configured such that when a minor fault or a minor coolant leak occurs in the battery cluster 102, the gas relay 115 controls the pre-warning switch KA3 to turn on. The second control switch SCU:DI1 is configured such that when a minor fault or a minor coolant leak occurs in the battery cluster 102, the system-level controller 106 controls the second control switch SCU:DI1 to turn on.

The turning on/turning off of the pre-warning switch KA3 is controlled by the pre-warning relay 115a. When the gas accumulation in the gas relay 115 reaches the first threshold or the float 145 drops to the first preset position (i.e., a minor fault or coolant leak occurs in the battery cluster 102), the pre-warning relay 115a controls the pre-warning switch KA3 to turn on and sends a warning signal to the system-level controller 106. The turning on/turning off of the second control switch SCU:DI1 is controlled by the system-level controller 106. Upon receiving the warning signal, the system-level controller 106 controls the second control switch SCU:DI1 to turn on.

In some cases, the cluster-level control circuit may further include a float switch KA1 and a float ball switch KA2. During a normal operation of the immersion liquid-cooled energy storage system 100, both the float switch KA1 and the float ball switch KA2 are turned off. When the float 145 drops to the first preset position, the magnet controls the signal triggering contacts to turn on, turning on the float switch KA1 and triggering the pre-warning relay 115a to send a warning signal to the system-level controller 106. In FIG. 9, an interaction between the float switch KA1 and the pre-warning relay 115a is represented by the series connection of the float switch KA1 and the pre-warning relay 115a. When the float ball 108 in the cooling unit 101 drops to the third preset position, the float ball switch KA2 is controlled to be turned on, triggering the emergency stop relay 115b to send a thermal runaway signal to the system-level controller 106. In FIG. 9, an interaction between the float ball switch KA2 and the emergency stop relay 115b is represented by the series connection of the float ball switch KA2 and the emergency stop relay 115b.

In some embodiments, with reference to FIG. 9, the cluster-level control circuit may further include a circuit breaker 107 connected in parallel with the first control switch SCU:DI2. The circuit breaker 107 is configured to be shut off when the circuit breaker 107 is electrically connected to the power supply.

It should be noted that, the electric valve 125 is electrically connected to the power supply only when both the emergency stop switch KA4 and the first control switch SCU:DI2 are turned on. Based on this, the circuit breaker 107 is electrically connected to the power supply only when both the emergency stop switch KA4 and the first control switch SCU:DI2 are turned on. At this time, the circuit breaker 107 is powered off. This stops an operation of the target battery cluster being subjected to thermal runaway, preventing a current of the target battery cluster from exacerbating the thermal runaway and promptly curbing the phenomenon in the target battery cluster, thereby further enhancing the safety of the immersion liquid-cooled energy storage system 100.

Those of ordinary skill in the art should understand that the above embodiments are specific implementations of the present disclosure. In practical applications, various modifications can be made in form and detail without departing from the scope of the embodiments of the present disclosure. Any person skilled in the art may make various changes and modifications without departing from the scope of the embodiments of the present disclosure. Therefore, the protection scope of the embodiments of the present disclosure shall be defined by the claims.

## Claims

1. An immersion liquid-cooled energy storage system, comprising:
at least two cooling units (101), each corresponding to a battery cluster (102) and having an accommodation cavity (111) for housing the battery cluster (102);
at least two sub-inlet pipes (113) and at least two sub-outlet pipes (114) corresponding to the at least two sub-inlet pipes (113) in a one-to-one configuration, with a respective sub-outlet pipe of the at least two sub-outlet pipes (114) and a sub-inlet pipe (113) corresponding to the respective sub-outlet pipe connected to a same cooling unit;
cluster-level control units (105) installed on the at least two sub-outlet pipes (114) and corresponding to the at least two sub-outlet pipes (114) in a one-to-one configuration, each of the cluster-level control units (105) including a gas relay (115) and an electric valve (125); and
a system-level controller (106), electrically connected to the cluster-level control units (105);
wherein the gas relay (115) is configured to, upon thermal runaway of a battery cluster (102) corresponding to the gas relay (115), send a thermal runaway signal to the system-level controller (106);
wherein the electric valve (125) is configured to open or close a cooling liquid flow path of a sub-outlet pipe (114) corresponding to the electric valve (125); and
wherein the system-level controller (106) is configured to identify the battery cluster (102) sending the thermal runaway signal as a target battery cluster, and receive the thermal runaway signal, and control the electric valve (125) corresponding to the target battery cluster to shut off.

2. The immersion liquid-cooled energy storage system according to claim 1, wherein the gas relay (115) includes a pre-warning relay (115a) and an emergency stop relay (115b);
the pre-warning relay (115a) is configured to: in case that a gas accumulation in the gas relay (115) reaches a first threshold, turn on a pre-warning switch and send a warning signal to the system-level controller (106);
the emergency stop relay (115b) is configured to: in case that the gas accumulation reaches a second threshold, turn on an emergency stop switch and send the thermal runaway signal to the system-level controller (106); and
the first threshold is less than the second threshold;
optionally, the first threshold ranges from 100 ml to 300 ml and the second threshold ranges from 400 ml to 600 ml.

3. The immersion liquid-cooled energy storage system according to claim 2, wherein the system-level controller (106) is further configured to receive the warning signal, and, based on the warning signal, produce an alert configured to remind maintenance personnel of potential hazards in the immersion liquid-cooled energy storage system.

4. The immersion liquid-cooled energy storage system according to claim 2, wherein the gas relay (115) is further configured to operate in a warning mode triggered by the pre-warning relay (115a) or in an emergency stop mode triggered by the emergency stop relay (115b).

5. The immersion liquid-cooled energy storage system according to any one of claims 1 to 4, wherein the gas relay (115) includes an inner cavity (135) for accommodating the coolant, a float (145) and a baffle (155) provided in the inner cavity (135), the float (145) floats with changes in a liquid level of the coolant in the inner cavity (135); and
the gas relay (115) further includes a magnet, signal triggering contacts, and circuit-breaking contacts;
the gas relay (115) is further configured such that:
in the case that the float (145) descends to a first preset position, the magnet controls the signal triggering contacts to turn on, to send a warning signal to the system-level controller (106); and
in the case the baffle (155) is impacted to a second preset position, the magnet controls the circuit-breaking contacts to turn on, to send the thermal runaway signal to the system-level controller (106);
taking the bottom surface of the inner cavity (135) as a reference plane, the second preset position is lower than the first preset position;
optionally, wherein the gas relay (115) is a single-float gas relay or a dual-float gas relay.

6. The immersion liquid-cooled energy storage system according to any one of claims 1 to 5, further comprising at least two circuit breakers (107) electrically connected to the battery clusters (102) and corresponding to the battery clusters (102) in a one-to-one configuration;
wherein the system-level controller (106) is further configured to: receive, the thermal runaway signal, and control the circuit breaker (107) corresponding to the target battery cluster to shut off, to cut off the power to the target battery cluster.

7. The immersion liquid-cooled energy storage system according to any one of claims 1 to 6, wherein the cooling unit (101) has an upper side (101a) and a lower side (101b) opposite to each other along a height direction of the immersion liquid-cooled energy storage system;
and among the sub-outlet pipe (114) and the sub-inlet pipe (113) connected to the same cooling unit, the sub-outlet pipe (114) is connected to the upper side (101a) while the sub-inlet pipe (113) is connected to the lower side (101b).

8. The immersion liquid-cooled energy storage system according to claim 7, wherein the sub-outlet pipe (114) has a first end (114a) close to the cooling unit (101) and a second end (114b) far away from the cooling unit (101), with the cluster-level control unit (105) installed on the second end (114b);
taking a plane of the lower side as a reference plane, a second distance between the second end (114b) and the reference plane is greater than a first distance between the first end (114a) and the reference plane;
optionally, wherein an included angle between a connecting line of the first end (114a) and the second end (114b) and the reference plane is in a range of 1.5° to 6°.

9. The immersion liquid-cooled energy storage system according to any one of claims 1 to 8, further comprising:
a float ball (108), located on a liquid surface of the coolant in the cooling unit (101), wherein the float ball (108) floats with a change of the liquid level of the coolant in the cooling unit (101); a float switch is arranged in the cooling unit (101);
the float switch is configured such that in the case that the float descends to a third preset position, the float switch is turned on;
the system-level controller (106) is further configured to, in the case that the float switch is turned on, receive the thermal runaway signal, and control the electric valve (125) corresponding to the target battery cluster to close.

10. The immersion liquid-cooled energy storage system according to any one of claims 1 to 9, further comprising:
a main inlet pipe (103), connected to the at least two sub-inlet pipes (113); and
a main outlet pipe (104), connected to the at least two sub-outlet pipes (114);
optionally, the immersion liquid-cooled energy storage system further comprises:
a liquid cooling machine (109) and a plate heat exchanger (119), configured to work together to cool the coolant from the main outlet pipe (104) before supplying the coolant back to the main inlet pipe (103);
optionally, the immersion liquid-cooled energy storage system further comprises:
a circulation pump (129), installed on the main inlet pipe (103).

11. The immersion liquid-cooled energy storage system according to any one of claims 1 to 10, further comprising a plurality of check valves;
wherein at least one of the plurality of check valves (139) is installed on an end close to the cooling unit (101) of a respective sub-inlet pipe of the at least two sub-inlet pipes (113), and is configured to control a coolant flow rate in the respective sub-inlet pipe (113); and
at least one of the plurality of check valves (139) is installed on an end close to the cooling unit (101) of the respective sub-outlet pipes (114), and is configured to control a coolant flow rate in the respective sub-outlet pipe (114).

12. A cluster-level control circuit, applied to the immersion liquid-cooled energy storage system according to any one of claims 1 to 11, comprising:
a power supply; and
an emergency stop switch (KA4) and a first control switch (SCU:DI2) connected in parallel with the power supply and in series with each other;
wherein the emergency stop switch (KA4) is configured such that in the case that a thermal runaway occurs in the battery cluster (102), the gas relay (115) controls the emergency stop switch (KA4) to turn on;
the first control switch (SCU:DI2) is configured such that in the case that the thermal runaway occurs in the battery cluster (102), the system-level controller (106) controls the first control switch (SCU:DI2) to turn on;
the electric valve (125) connected in parallel with the first control switch (SCU:DI2) is configured such that in the case that the electric valve (125) is electrically connected to the power supply, the electric valve (125) is shut off.

13. The cluster-level control circuit according to claim 12, further comprising:
a pre-warning switch (KA3) and a second control switch (SCU;DI1) connected in parallel with the power supply and in series with each other;
wherein the pre-warning switch (KA3) is configured such that in the case that a minor fault or a minor coolant leakage occurs in the battery cluster (102), the gas relay (115) controls the pre-warning switch (KA3) to turn on;
the second control switch (SCU;DI1) is configured such that in the case that a minor fault or a minor coolant leakage occurs in the battery cluster (102), the system-level controller (106) controls the second control switch (SCU;DI1) to turn on;
and/or,
a circuit breaker (107) connected in parallel with the first control switch (SCU:DI2), is configured such that in the case that the circuit breaker (107) is electrically connected to the power supply, the circuit breaker (107) is shut off.

14. The cluster-level control circuit according to claim 12 or claim 13, further comprising a float switch (KA1) and a float ball switch (KA2);
wherein the float switch (KA1) and the float ball switch (KA2) are configured to be turned off during a normal operation of the immersion liquid-cooled energy storage system;
the float switch (KA1) is further configured to be turned on upon a float (145) in the cooling unit (101) dropping to a first preset position and a magnet controlling triggering contacts to turn on, and trigger a pre-warning relay (115a) in the gas relay (115) to send a warning signal to the system-level controller (106);
the float ball switch (KA2) is further configured to be turned on upon a float ball (108) in the cooling unit (101) dropping to a third preset position and trigger an emergency stop relay (115b) in the gas relay (115) to send the thermal runaway signal to the system-level controller (106).

15. The cluster-level control circuit according to any one of claims 12 to 14, further comprising a circuit breaker (107) connected in parallel with the first control switch (SCU:DI2) and configured to be shut off in a cash that the circuit breaker (107) is electrically connected to the power supply.
